# EUROPÄISCHE PATENTSCHRIFT

(11) **EP 0 867 334 B1**
(45) Veröffentlichungstag und Bekanntmachung des Hinweises auf die Patenterteilung: **18.12.2002**
(21) Anmeldenummer: 98102713.9
(22) Anmeldetag: 17.02.1998
(51) Int. Cl.: B60N 2/48, B21D 39/20, B21D 26/02

(54) **Verfahren und Formwerkzeug zum Herstellen eines stabförmigen Stützkörpers**
Method and tool for making a rod-shaped supporting body
Procédé et outil pour fabriquer un corps d'appui en forme de barre

(30) Priorität: 27.03.1997 DE 19713074
(43) Veröffentlichungstag der Anmeldung: 30.09.1998
(73) Patentinhaber: Kendrion RSL Germany GmbH, 57368 Lennestadt (DE)
(72) Erfinder: Strunk, Harald, 58840 Plettenberg (DE); Meier, Bernd, 57439 Attendorn (DE)
(74) Vertreter: Nöth, Heinz, Dipl.-Phys.

(56) Entgegenhaltungen:
- EP-A- 0 620 056
- DE-A- 4 337 145
- GB-A- 2 240 944
- US-A- 5 070 717
- US-A- 5 303 570

## Beschreibung

Die Erfindung betrifft einen Stützkörper mit insbesondere Stabform und einer an einem Metallrohr gebildeten Außenkontur sowie ein Verfahren zur Herstellung eines derartigen Stützkörpers und ein Formwerkzeug zur Durchführung des Verfahrens.

Es ist bekannt, insbesondere stabförmige Stützkörper, welche beispielsweise als Raststangen für Kopfstützen an Kraftfahrzeugsitzen verwendet werden, aus massivem Rundmaterial (Halbzeug) zu fertigen. Rastkonturen bzw. Rastkerben, welche zur Höhenverstellung der Kopfstütze in die Raststangen eingeformt sind, werden durch mechanische Bearbeitung, z.B. spanend, eingebracht. Hierdurch ist ein zusätzlicher Bearbeitungsschritt an dem stabförmigen Stützkörper, insbesondere der Raststange erforderlich. Ferner müssen stabförmige Stützkörper, insbesondere wenn sie als Raststangen verwendet werden, eine hohe Knicksteifigkeit aufbringen, um die geforderten Sicherheitsfunktionen zu erfüllen.

Ein Verfahren zur Verformung eines rohrförmigen Halbzeuges durch in seinem Inneren aufgebauten hydraulischen Druck ist z.B. in EP-A-0 620 056 beschrieben.

Aufgabe der Erfindung ist es, einen insbesondere stabförmigen Stützkörper sowie ein Verfahren zu seiner Herstellung und ein Formwerkzeug zur Durchführung des Verfahrens zu schaffen, durch welche der Stützkörper mit der gewünschten Außenkontur und der erforderlichen mechanischen Festigkeit ohne großen Aufwand erreicht wird.

Diese Aufgabe wird beim eingangs genannten Stützkörper dadurch gelöst, daß das Metallrohr durch Formgebung mittels eines in das Rohrinnere eingebrachten und nach der Formgebung verfestigten Druckmediums, welches als stabilitätserhöhende Rohrfüllung im Rohrinnern verbleibt, bleibend verformt ist. Für die Rohrfüllung wird in bevorzugter Weise ein aushärtbarer thermoplastischer Kunststoff verwendet. Das Material der Rohrfüllung wird mit hohem Druck in das Rohrinnere eingebracht, so daß eine Verformung des Rohrmaterials erreicht wird. Hierzu kann das Material der Rohrfüllung in herkömmlicher Spritzgußtechnik in das Rohrinnere eingebracht werden. Das Rohr, welches aus Metall bestehen kann, wird als Rundmaterial in die Höhlung eines Formwerkzeuges eingebracht. Die Höhlung kann in vorteilhafter Weise die Konturen aufweisen, welche der gewünschten Außenkontur des Rohres entspricht. Beispielsweise können an der Wand der Höhlung Vorsprünge vorgesehen sein, welche Einkerbungen in das Rohräußere einformen. Ferner kann die Höhlung einen von der Kreisform abweichenden Querschnitt, beispielsweise einen ovalen Querschnitt oder mehreckigen Querschnitt, aufweisen, mit welchem das Rohr bei dem Hochdruckinnenverformungsverfahren bleibend verformt wird. Vor allem bei der Herstellung von Raststangen für Kopfstützen eines Kraftfahrzeugsitzes erweist sich die Erfindung von Vorteil. Man erreicht länglich ausgebildete Stützkörper, deren Knicksteifigkeit den Sicherheitsanforderungen entspricht. Erreicht wird dies durch die verstärkende Funktion, welche das im Rohrinnern verbleibende und verfestigte, insbesondere ausgehärtete Rohrfüllungsmaterial, in Zusammenwirkung mit dem verformten Metallrohr erbringt. Zusätzliche Bearbeitungsschritte am Metallrohr, beispielsweise eine spanende Bearbeitung um Rastkonturen, beispielsweise in Form von Kerben, in das Äußere der Raststange einzubringen, können entfallen. Die erfindungsgemäßen Stützkörper können dort Anwendung finden, wo hohe Kräfte aufgenommen werden müssen oder in einem Grundkörper weitergeleitet werden müssen.

Die Verformung der Rohrwand erfolgt in bevorzugter Weise durch Kaltformgebung, wobei jedoch das insbesondere thermoplastische Material der Rohrfüllung im fließfähigen Zustand mit beim Spritzgießen üblichen hohen Druck in das Rohrinnere eingebracht wird. Es ist auch möglich, zwei oder mehr Metallrohre zunächst als Halbzeuge in Höhlungen des Formwerkzeuges einzubringen, wobei das Material für die Rohrfüllung den einen Enden der Rohre zugeführt wird und die anderen Enden der Rohre über eine oder mehrere formgebende Höhlungen im Formwerkzeug miteinander verbunden sind. Auf diese Weise erreicht man eine Verbindung zwischen zwei oder mehr geformten Rohren durch die ausgehärtete Masse der Rohrfüllung. Bei der Herstellung von Raststangen für Kopfstützen kann diese Verbindung zwischen den beiden oberen Enden der Raststangen so ausgebildet sein, daß eine vereinfachte Montage der Raststangen in Kopftstützenkörper erreicht wird.

Anhand der Figuren wird die Erfindung noch näher erläutert. Es zeigt:
- Fig. 1:: ein Metallrohr, welches ein Halbzeug bildet und zur Erläuterung der Erfindung längs seiner Achse geschnitten ist;
- Fig. 2:: das in eine Höhlung eines Formwerkzeuges eingelegte Halbzeug-Metallrohr;
- Fig. 3:: das im Werkzeug geformte Metallrohr mit dem als Rohrfüllung verbleibenden Druckmedium;
- Fig. 4:: ein Ausführungsbeispiel eines Stützkörpers, der aus dem Halbzeug-Metallrohr mit gewünschter metallischer Außenkontur geformt ist;
- Fig. 5:: zwei Metallrohre, welche für den nachfolgenden Formvorgang die Halbzeuge bilden;
- Fig. 6:: die beiden Halbzeuge der Fig. 5, welche in ein Formwerkzeug eingelegt sind,
- Fig. 7:: die beiden Metallrohre, in welche die Rohrfüllung eingebracht ist, wobei über das Rohrfüllungsmaterial eine Verbindung mit den beiden gefüllten Rohren hergestellt ist;
- Fig. 8:: die aus dem Formwerkzeug entnommenen Stützkörper;
- Fig. 9:: die beiden Stützkörper der Fig. 8, welche als Raststangen in einer Kopfstütze verankert sind;
- Fig. 10:: eine Querschnittsform einer Höhlung des Formwerkzeugs, in welche ein Metallrohr-Halbzeug vor dem Formvorgang eingesetzt ist;
- Fig. 11:: die Querschnittsform des verformten Metallrohres mit der im Rohrinnern verbliebenen Rohrfüllung;
- Fig. 12:: ein weiteres Ausführungsbeispiel für ein Formwerkzeug;
- Fig. 13:: das Formwerkzeug mit dem darin geformten Stützkörper;
- Fig. 14:: ein Ausführungsbeispiel des Stützkörpers, der gemäß den Fig. 12 und 13 hergestellt wurde;
- Fig. 15:: den in Fig. 14 dargestellten Stützkörper, welcher in eine Kopfstütze eingebaut ist;
- Fig. 16:: eine perspektivische Detaildarstellung eines unteren Endes der Raststangen, welche gemäß Fig. 15 in der Kopfstütze eingebaut sind;
- Fig. 17:: eine Darstellung entlang eine Schnittlinie A-A in Fig. 15;
- Fig. 18:: ein in ein Formwerkzeug eingelegtes Halbzeug zur Herstellung eines gebogenen stabförmigen Stützkörpers;
- Fig. 19:: der gebogene stabförmige Stützkörper im Formwerkzeug;
- Fig. 20:: ein weiteres Ausführungsbeispiel, bei dem ein rohrförmiges Halbzeug in ein Formwerkzeug eingesetzt ist; und
- Fig. 21:: ein unteres Ende eines stabförmigen Stützkörpers.

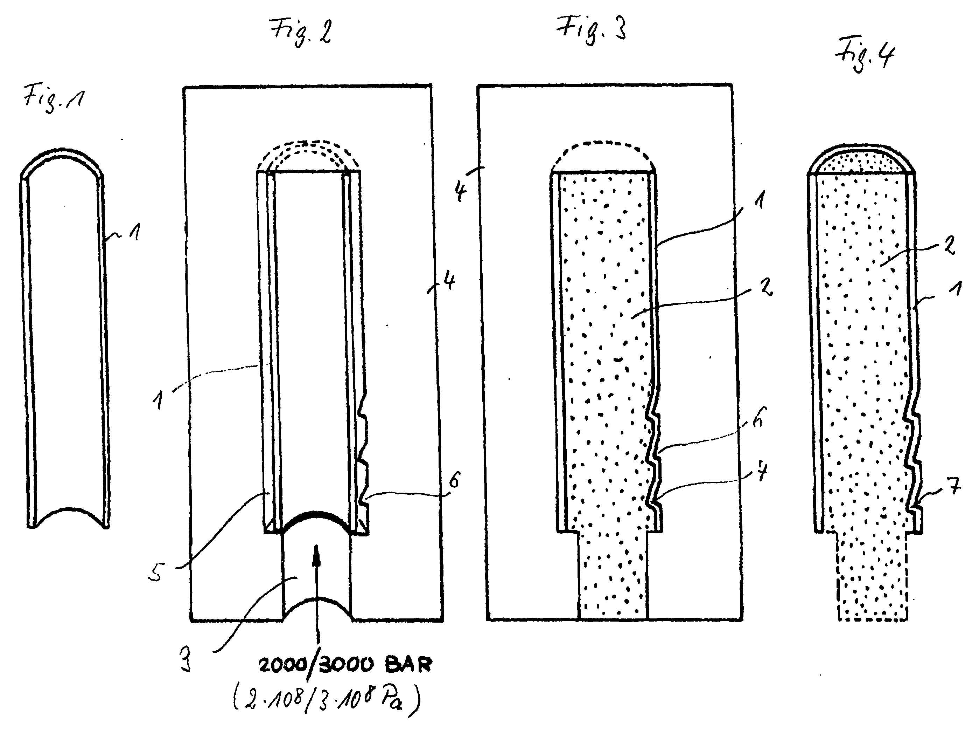

Bei den dargestellten Ausführungsbeispielen wird zur Herstellung eines Stützkörpers, von denen Ausführungsbeispiele in den Figuren 4, 8 und 14 dargestellt sind, ein Metallrohr 1 als massives Rundmaterial (Halbzeug) verwendet. Beim Ausführungsbeispiel der Figuren 1 bis 4 wird ein Metallrohr verwendet, und bei den Ausführungsbeispielen der Figuren 5 bis 9 sowie 12 bis 15 werden zwei Metallrohre verwendet. Zur Erläuterung der Ausführungsbeispiele sind Schnitte längs der Rohrachsen dargestellt. Das Metallrohr 1 wird zur Herstellung des Stützkörpers, der insbesondere Stabform aufweist und eine gewünschte metallische Außenkontur besitzt, in eine Höhlung 5 eines Formwerkzeugs 4 eingebracht. In der Wandung der Höhlung 5 können Vorsprünge 6 an separaten Stellen auf einer Linie, die paarallel zur Rohrachse verläuft, vorgesehen sein. In das Rohrinnere wird mit hohem Druck in der Größenordnung von 2 bis 3 x 10⁸ Pa ein fließfähiges Druckmedium, insbesondere Kunststoff (thermoplastischer Kunststoff) eingebracht. Dieses Druckmedium übt im Rohrinnern einen Formgebungsdruck aus dahingehend, daß das Rohr an die Innenkontur der Höhlung 5 des Formwerkzeuges 4 angepreßt und dadurch angepaßt wird. Wenn die Höhlung 5, beispielsweise wie in Fig. 10 dargestellt ist, oval ausgebildet ist, wird das Rohr 1 auf diese ovale Form ausgeweitet. Dabei werden ferner nach innen ragende Formvorsprünge 6 in das Rohrmaterial eingedrückt. Dadurch entstehen entsprechende Verformungen, beispielsweise Raststellen 7, in Form von Einkerbungen. Es können auch andere Formen als die in den Figuren dargestellten Rastkerben eingedrückt werden.

Das als fließfähiges Druckmedium in das Rohrinnere eingebrachte Material verbleibt nach seiner Verfestigung, z.B. durch Aushärten, als Rohrfüllung 2 im Rohrinnern. Die Rohrfüllung 2 bildet eine Verstärkung des stabförmig ausgebildeten Stützkörpers (Figuren 4 und 8). Gegebenenfalls kann das Füllmaterial 2 Additive, beispielsweise Faserverstärkungen und dergl. zur Erhöhung der Festigkeit aufweisen. Es ist auch möglich, in die Rohrachse beim Formvorgang einen Draht bzw. stabförmigen Kernkörper einzulegen, durch welchen eine durchgehende axiale Öffnung in den jeweils fertigen Stützkörper, wie er in den Fig. 4, 8 und 14 dargestellt ist, eingeformt wird. Der Kernkörper wird aus der Rohrfüllung 2 zur Bildung der durchgehenden axialen Bohrung beim Entfernen des fertigen Stützkörpers aus dem Formwerkzeug herausgenommen.

Die Innenkontur der Höhlung 5 wird beim Formvorgang in das vom Innendruck nach außen gedrückte Rohrwandmaterial eingeformt. Dabei nimmt die Rohrwand ferner die Querschnittsform auf, welche die Höhlung 5 hat. Wie aus der Fig. 11 zu ersehen ist, hat der fertige Stützkörper beispielsweise die durch die Höhlung 5 vorgegebene ovale bzw. etwa elliptische Querschnittsform.

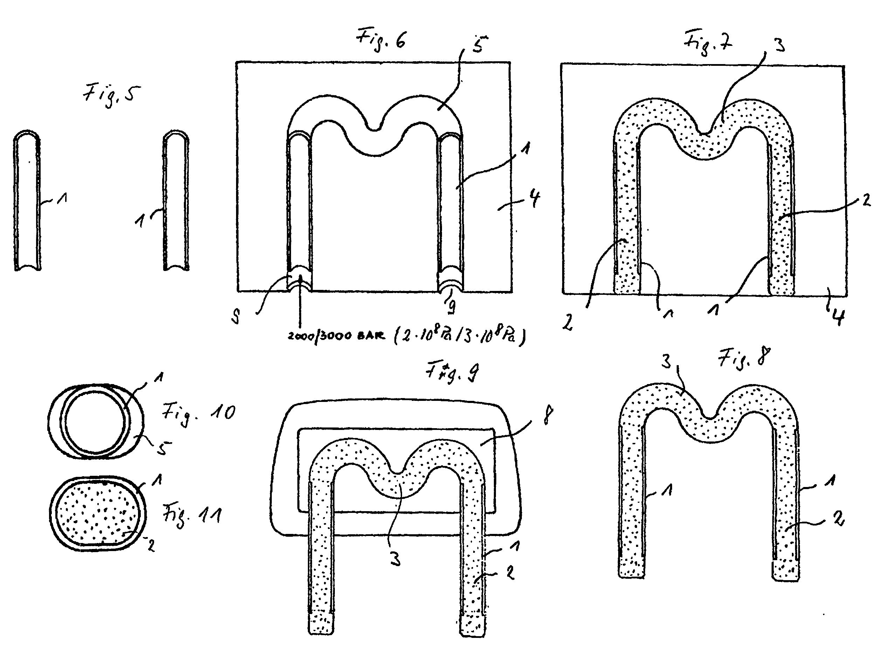

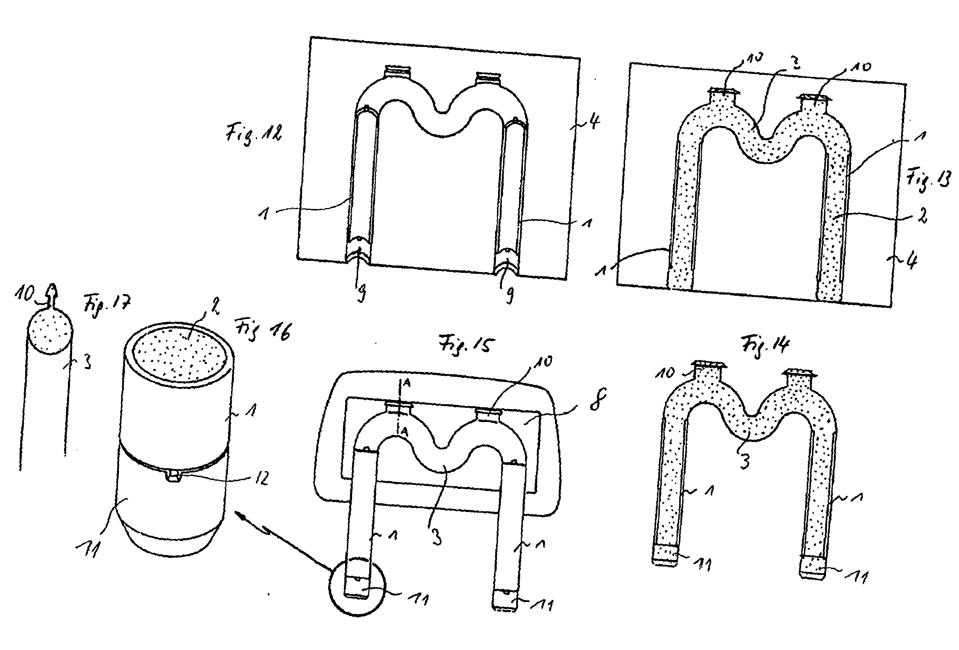

Beim Ausführungsbeispiel der Figuren 5 bis 9 ist im Formwerkzeug 4 die Höhlung 5 so ausgebildet, daß eine Verbindung zwischen den oberen Enden des Metallrohres 1 hergestellt ist. An den Angußöffnungen 9 (Fig. 6) wird das Druckmedium in Form des fließfähigen Materials mit hohem Druck in das Innere der beiden Rohre 1 eingebracht. Das Formwerkzeug 4 ist im Bereich der Angußöffnung so ausgebildet, daß das Druckmedium sicher in das Rohrinnere geleitet wird. Auch bei diesem Ausführungsbeispiel verbleibt das Druckmedium aus Rohrfüllung 2 (Fig. 7), wobei zwischen den beiden oberen Enden der gefüllten Rohre 1 durch die Höhlung 5, welche mit dem eingebrachten Druckmedium ebenfalls angefüllt ist, ein Formling 3 gebildet wird. Der Formling 3 kann eine gewünschte Form aufweisen, mit welcher die Verankerung der beiden stabförmigen Stützkörper in einem Gegenstand erleichtert wird. Beim dargestellten Ausführungsbeispiel wird durch den Formling 3 die Verankerung der beiden als Raststangen ausgebildeten Stützkörper in einem Kopfstützenkörper 8 erleichtert. Bei dem Ausführungsbeispiel der Figuren 5 bis 9 lassen sich in einem Arbeitsgang beide Raststangen für eine Kopfstütze herstellen. Dabei können, wie beim Ausführungsbeispiel der Figuren 1 bis 4 gezeigt ist, die Rastkerben 7 ebenfalls beim Hohldruckinnenformverfahren in die Rohrwandung eingeprägt werden.

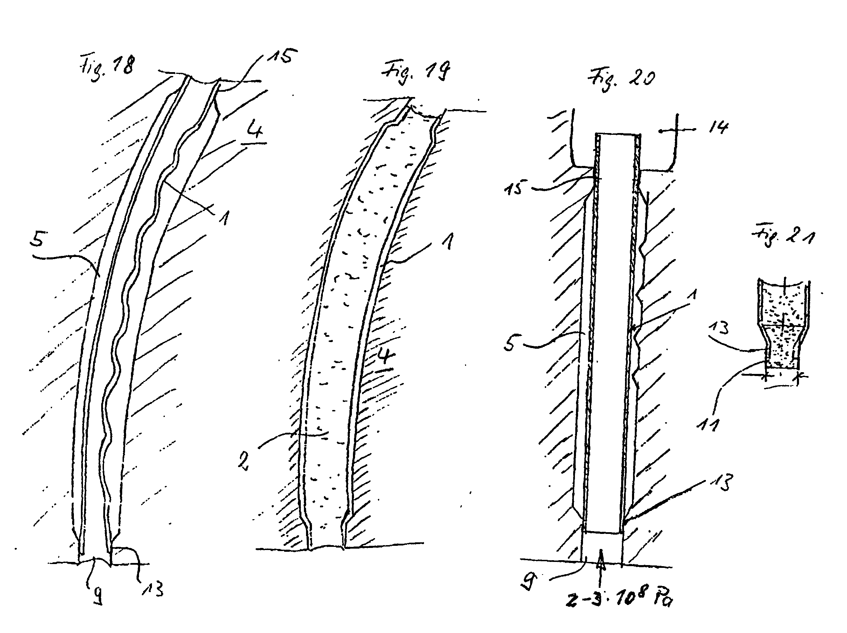

Das in Fig. 14 dargestellte Ausführungsbeispiel zweier Raststangen für eine Kopfstütze eines Kraftfahrzeugsitzes wird in der gleichen Weise hergestellt wie das Ausführungsbeispiel der Fig. 8. Es werden zwei Metallrohre 1 als Halbzeuge in die Höhlung in das Formwerkzeug 4 eingebracht. Die Angußöffnungen 9 des Formwerkzeuges sind so ausgebildet, daß untere Stützenenden 11 eine Abfasung besitzen, mit der sie in entsprechende Halterungen in der Sitzlehne des Kraftfahrzeugsitzes eingesetzt werden können. Ferner kann eine Rastausnehmung 12 eingeformt werden, so daß die unteren Stützenenden 11 und damit die Kopfstütze sicher in der Sitzlehne verankert ist.

Wie beim Ausführungsbeispiel der Fig. 4 gezeigt ist, können jedoch auch Einkerbungen zur Höhenverstellung in die beiden Raststangen, welche von den beiden Rohren 1 und der darin befindlichen Rohrfüllung 2 gebildet werden, eingeformt sein. In der Fig. 16 ist die Detaildarstellung des unteren Endes einer jeweiligen Raststange gezeigt.

An der Oberseite des Formlings 3, welcher die beiden oberen Enden der Raststangen miteinander verbindet, können Verankerungsvorsprünge 10, von denen ein Querschnitt in der Fig. 17 dargestellt ist, angeformt sein. Diese Verankerungsvorsprünge 10 vermitteln eine verbesserte Verankerung im Kopfstützenkörper 8.

In den Fig. 18 und 19 ist die Herstellung eines gebogenen stabförmigen Stützkörpers dargestellt. Ein rohrförmig vorgebogenes Halbzeug, welches beim Vorbiegen entstandene Einknickungen aufweist, wird in die Höhlung 5 des Formwerkzeuges 4 eingebracht. Beim Einbringen des Druckmediums durch die Angußöffnung 9 verformt sich das rohrförmige Halbzeug mit Anpassung an die Innenkontur der Formhöhlung 5, wobei die beim Vorbiegen entstandenen Einknickungen durch das in das Rohrinnere eingebrachte Druckmedium wieder nach außen gedrückt werden wie es in Fig. 19 dargestellt ist. Das Druckmedium, welches ein Thermoplast sein kann, verbleibt als ausgehärtete Rohrfüllung im Rohrinnern des fertigen Stützkörpers.

Wie aus den Fig. 18 und 20 zu ersehen ist, kann das Rohr 1 als Halbzeug vor seiner Formgebung so in das Formwerkzeug 4 eingelegt werden, daß im Bereich der Angußöffnung 9 eine Dichtfläche 13 des Formwerkzeuges den unteren Teil des Rohres 1 druckdicht umgibt. Auch am oberen Teil des Rohres kann eine Dichtfläche 15 vorgesehen sein. Im Bereich der Dichtflächen 13 und 15 behält das Rohr seine Form bei wie es beispielsweise aus Fig. 21 zu ersehen ist. Im Bereich der Dichtfläche besitzt der fertige Stützkörper einen Durchmesser und eine Form, wie es das ursprüngliche Halbzeug hatte oder eine der jeweiligen Dichtfläche angepaßte Form..

Der Querschnitt der rohrförmigen Halbzeuge, welche das Ausgangsmaterial bei der Stützkörperherstellung bilden, kann von der kreisrunden Form abweichen. Es können in Abhängigkeit von den gewünschten Querschnittsformen des Stützkörpers passende Querschnitte des rohrförmigen Halbzeugs vorgesehen sein.

Wie aus der Fig. 20 zu ersehen ist, kann die Formhöhlung 5 zur Anbindung des Formlings 3 einen erweiterten Höhlungsbereich 14 aufweisen. Das als Formling 3 angeformte Funktionselement (Verankerungselement) hat dann einen größeren Querschnitt als der stabförmige Teil des Stützkörpers.

## Patentansprüche

1. Stützkörper mit insbesondere Stabform und einer an einem Metallrohr gebildeten Außenkontur,
**dadurch gekennzeichnet ,**
**daß** das Metallrohr (1) zur Bildung der Außenkontur durch Formgebung mittels eines in das Rohrinnere eingebrachten und nach der Formgebung verfestigten Druckmediums, welches als stabilitätserhöhende Rohrfüllung (2) im Rohrinnern verbleibt, bleibend verformt ist.

2. Stützkörper nach Anspruch 1, **dadurch gekennzeichnet, daß** die Rohrfüllung (2) aus einem ausgehärteten thermoplastischen Material besteht.

3. Stützkörper nach Anspruch 1 oder 2, **dadurch gekennzeichnet, daß** die Rohrfüllung (2) von einer Spritzgußmasse gebildet ist.

4. Stützkörper nach einem der Ansprüche 1 bis 3, **dadurch gekennzeichnet, daß** das Metallrohr (1) durch Kaltformgebung verformt ist.

5. Stützkörper nach einem der Ansprüche 1 bis 4, **dadurch gekennzeichnet, daß** zwei oder mehrere die Rohrfüllung (2) aufweisende Metallrohre über aus dem Rohrfüllungsmaterial bestehende Formlinge (3) miteinander verbunden sind.

6. Stützkörper nach einem der Ansprüche 1 bis 5, **dadurch gekennzeichnet, daß** in der Rohrwand des Metallrohres (1) an separaten Stellen Einformungen (7), insbesondere Einkerbungen, eingedrückt sind.

7. Stützkörper nach einem der Ansprüche 1 bis 6, **dadurch gekennzeichnet, daß** das Metallrohr (1) mit einem bestimmten bleibenden Querschnitt verformt ist.

8. Stützkörper nach einem der Ansprüche 1 bis 7, **dadurch gekennzeichnet, daß** der Querschnitt eine von einem Kreis abweichende Form aufweist.

9. Stützkörper nach einem der Ansprüche 1 bis 8, **dadurch gekennzeichnet, daß** das Metallrohr (1) mit seiner Rohrfüllung (2) als Stützstange für eine Kopfstütze eines Kraftfahrzeugsitzes ausgebildet ist.

10. Verfahren zur Herstellung eines insbesondere stabförmigen Stützkörpers mit einer bestimmten Außenkontur nach einem der Ansprüche 1 bis 9,
**dadurch gekennzeichnet ,**
**daß** in die Höhlung eines Formwerkzeuges ein Metallrohr eingebracht wird, in dessen Rohrinneres ein fließfähiges Medium mit einem auf die Rohrwandung wirkenden Verformungsdruck eingebracht wird, durch welchen die gewünschte Außenkontur, welche der Innenkontur der Höhlung des Formwerkzeugs entspricht, gebildet wird und daß nach der Formgebung das fließfähige Material im Rohrinnern verbleibend zu einer das Rohrinnere ausfüllenden Stützkörperverstärkung verfestigt wird.

11. Verfahren nach Anspruch 10, **dadurch gekennzeichnet, daß** der Verformungsdruck durch Spritzgießen erzeugt wird.

12. Verfahren nach Anspruch 10 oder 11, **dadurch gekennzeichnet, daß** als fließfähiges Material Kunststoff, insbesondere ein Thermplast, verwendet wird.

13. Verfahren nach einem der Ansprüche 10 bis 12, **dadurch gekennzeichnet, daß** das Metallrohr durch Kaltformgebung verformt wird.

14. Verfahren nach einem der Ansprüche 1 bis 13, **dadurch gekennzeichnet, daß** durch Druckumformen und in der Höhlung des Formwerkzeuges vorgegebene Formgebungsvorsprünge in die Rohrwand an separaten Stellen Eindrückungen, insbesondere Einkerbungen, eingeformt werden.

15. Verfahren nach einem der Ansprüche 10 bis 14, **dadurch gekennzeichnet, daß** durch das im Rohrinnern verbleibende Druckmedium und die formgebende Höhlung des Werkzeugs das Metallrohr mit einem verbleibenden und von der Kreisform abweichenden Querschnitt verformt wird.

16. Formwerkzeug zur Durchführung eines Verfahrens nach einem der Ansprüche 10 bis 15 mit einer Höhlung zur Formgebung,
**dadurch gekennzeichnet,**
**daß** die Höhlung (5) zur Aufnahme eines Metallrohres (1) als Halbzeug, das einen geringeren Durchmesser als die Höhlung aufweist, ausgebildet ist und das eine Angußöffnung (9) ein von außen mit hohem Druck zugeführtes Druckmedium in das Rohrinnere des Metallrohres (1) leitet.

17. Formwerkzeug nach Anspruch 16, **dadurch gekennzeichnet, daß** die Angußöffnung (9) auf ein am Stützkörper verbleibendes jeweiliges Stützenende (11), welches vom Rohrfüllungsmaterial (2) gebildet ist, eine formgebende Wirkung aufweist.

## Claims

1. A support body of an in particular bar shape and with an external contour formed on a metal tube,
**characterised in that** to form the external contour the metal tube (1) is permanently deformed by shaping by means of a pressure medium which is introduced into the tube interior and which is solidified after the shaping operation and which remains in the tube interior as a stability-enhancing tube filling (2).

2. A support body according to claim 1 **characterised in that** the tube filling (2) comprises a hardened thermoplastic material.

3. A support body according to claim 1 or claim 2 **characterised in that** the tube filling (2) is formed by an injection moulded material.

4. A support body according to one of claims 1 to 3 **characterised in that** the metal tube (1) is deformed by cold shaping.

5. A support body according to one of claims 1 to 4 **characterised in that** two or more metal tubes having the tube filling (2) are connected together by way of mouldings (3) comprising the tube filling material.

6. A support body according to one of claims 1 to 5 **characterised in that** inwardly shaped portions (7), in particular notches, are pressed into the wall of the metal tube (1) at separate locations.

7. A support body according to one of claims 1 to 6 **characterised in that** the metal tube (1) is deformed with a given permanent cross-section.

8. A support body according to one of claims 1 to 7 **characterised in that** the cross-section is of a shape differing from a circle.

9. A support body according to one of claims 1 to 8 **characterised in that** the metal tube (1) with its tube filling (2) is in the form of a support rod for a head support of a motor vehicle seat.

10. A process for producing an in particular bar-shaped support body of a given external contour according to one of claims 1 to 9
**characterised in that**
a metal tube is introduced into the cavity of a moulding tool, a medium capable of flow is introduced into the interior of the metal tube under a deformation pressure which acts on the wall of the tube and by which the desired external contour which corresponds to the internal contour of the cavity of the moulding tool is formed and that after the shaping operation the material capable of flow is permanently solidified in the interior of the tube to form a support body reinforcement filling the interior of the tube.

11. A process according to claim 10 **characterised in that** the deformation pressure is produced by injection moulding.

12. A process according to claim 10 or claim 11 **characterised in that** plastic material, in particular a thermoplastic material, is used as the material capable of flow.

13. A process according to one of claims 10 to 12 **characterised in that** the metal tube is deformed by cold shaping.

14. A process according to one of claims 1 to 13 **characterised in that** impressions, in particular notches, are formed in the wall of the tube at separate locations by pressure re-shaping and shaping projections which are predetermined in the cavity of the moulding tool.

15. A process according to one of claims 10 to 14 **characterised in that** the metal tube is deformed with a permanent cross-section deviating from a circular shape by the pressure medium which remains in the interior of the tube and the shaping cavity of the tool.

16. A moulding tool for carrying out a process according to one of claims 10 to 15 with a cavity for the shaping operation,
**characterised in that**
the cavity (5) is designed to receive a metal tube (1) in the form of a semifinished article which is of a smaller diameter than the cavity and a feed opening (9) passes into the interior of the metal tube (1) a pressure medium which is supplied from the exterior under high pressure.

17. A moulding tool according to claim 16 **characterised in that** the feed opening (9) has a shaping action on a respective support end (11) which remains on the support body and which is formed by the tube filling material (2).

## Revendications

1. Pièce de support ayant la notamment la forme d'un barreau et un contour extérieur formée par un tube métallique,
**caractérisée**
**en ce que** le tube (1) métallique est, pour la formation du contour extérieur, déformé de manière permanente, par formage au moyen d'un milieu sous pression qui est introduit à l'intérieur du tube, qui est solidifié après le formage et qui reste à l'intérieur du tube, en tant que garnissage (2) du tube augmentant la résistance.

2. Pièce de support suivant la revendication 1, **caractérisée en ce que** le garnissage (2) du tube est en une matière thermoplastique durcie.

3. Pièce de support suivant la revendication 1 ou 2, **caractérisée en ce que** le garnissage (2) du tube est formé d'une composition moulée par injection.

4. Pièce de support suivant l'une des revendications 1 à 3, **caractérisée en ce que** le tube (1) métallique est déformé par formage à froid.

5. Pièce de support suivant l'une des revendications 1 à 4, **caractérisée en ce que** deux tubes métalliques, ou plus de deux tubes métalliques, comportant le garnissage (2) de tube sont reliés entre eux par des pièces façonnées (3) dans la matière de garnissage du tube.

6. Pièce de support suivant l'une des revendications 1 à 5, **caractérisée en ce qu'**il est imprimé dans la paroi du tube (1) métallique en des emplacements distincts, des déformations (7) notamment des encoches.

7. Pièce de support suivant l'une des revendications 1 à 6, **caractérisée en ce que** le tube (1) métallique est déformé, en ayant une section transversale déterminée qui reste constante.

8. Pièce de support suivant l'une des revendications 1 à 7, **caractérisée en ce que** la section transversale a une forme s'écartant de celle d'un cercle.

9. Pièce de support suivant l'une des revendications 1 à 8, **caractérisée en ce que** le tube (1) métallique et son garnissage (2) de tube sont constitués sous la forme d'une barre de support d'un appui-tête d'un siège de véhicule automobile.

10. Procédé de fabrication d'une pièce de support, notamment en forme de barreau, d'un contour extérieur déterminé suivant l'une des revendications 1 à 9,
**caractérisé**
**en ce que** l'on introduit dans l'empreinte d'un outil de moulage un tube métallique, on introduit à l'intérieur du tube un milieu susceptible de s'écouler, en ayant une pression de déformation agissant sur la paroi du tube, par laquelle il est formé le contour extérieur souhaité qui correspond au contour intérieur de l'empreinte de l'outil de moulage et après le formage, on solidifie la matière susceptible de s'écouler restant à l'intérieur du tube, en un renfort de la pièce de support remplissant l'intérieur du tube.

11. Procédé suivant la revendication 10, **caractérisé en ce que** l'on produit la pression de déformation par moulage par injection.

12. Procédé suivant la revendication 10 ou 11, **caractérisé en ce que** l'on utilise comme matière susceptible de s'écouler, de la matière plastique notamment une matière thermoplastique.

13. Procédé suivant l'une des revendications 10 à 12, **caractérisé en ce que** l'on déforme le tube métallique par formage à froid.

14. Procédé suivant l'une des revendications 1 à 13, **caractérisé en ce que** par des déformations sous pression, et par des saillies de formage prévues dans l'empreinte de l'outil de moulage, on forme dans la paroi du tube en des endroits distincts des empreintes, notamment des encoches.

15. Procédé suivant l'une des revendications 10 à 14, **caractérisé en ce que** par le milieu sous pression restant à l'intérieur du tube et l'empreinte de formage de l'outil, on déforme le tube métallique en ayant une section transversale constante et s'écartant de la forme d'un cercle.

16. Outil de moulage pour la mise en oeuvre d'un procédé suivant l'une des revendications 10 à 15, ayant une empreinte de formage,
**caractérisé**
**en ce que** l'empreinte (5) est conçue pour la réception d'un tube (1) métallique en tant que demi-produit qui a un diamètre plus petit que celui de l'empreinte, et en ce qu'un orifice (9) d'injection conduit à l'intérieur du tube (1) métallique, un milieu sous pression apporté de l'extérieur sous haute pression.

17. Outil de moulage suivant la revendication 16, **caractérisé en ce que** l'orifice (9) d'injection a un effet de formage sur une extrémité (11) d'appui respective, qui reste sur la pièce de support et qui est formée par la matière (2) de garnissage du tube.
